(19) Europäisches Patentamt
European Patent Office
Office européen des brevets

(11) EP 1 900 763 A1

(12) **EUROPÄISCHE PATENTANMELDUNG**

(43) Veröffentlichungstag:
**19.03.2008 Patentblatt 2008/12**

(51) Int Cl.:
***C08F 240/00*** *(2006.01)* ***C10G 50/00*** *(2006.01)*
***C08F 212/00*** *(2006.01)*

(21) Anmeldenummer: **06019322.4**

(22) Anmeldetag: **15.09.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Rütgers Chemicals GmbH**
**47138 Duisburg (DE)**

(72) Erfinder:
- **Hillner, Knut**
  **59379 Selm (DE)**
- **Müller, Peter**
  **49808 Lingen (DE)**
- **Thomsen, Sven-Arne**
  **45276 Essen (DE)**
- **Schäferling, Heinz**
  **49149 Oberhausen (DE)**
- **Szarvas, Laszlo**
  **67971 Ludwigshafen (DE)**
- **Uerdingen, Eric**
  **67346 Speyer (DE)**
- **Vagt, Uwe**
  **68165 Mannheim (DE)**
- **Wissel, Kathrin**
  **56056 Ludwigshafen (DE)**

(74) Vertreter: **Schaad, Balass, Menzl & Partner AG**
**Dufourstrasse 101**
**Postfach**
**8034 Zürich (CH)**

(54) **Verfahren zur Herstellung eines Kohlenwasserstoffharzes**

(57) Die vorliegende Erfindung betrifft ein Verfahren zur Herstellung eines Kohlenwasserstoffharzes durch Polymerisation einer Monomerzusammensetzung enthaltend mindestens ein Monomer ausgewählt aus der Gruppe bestehend aus Vinyltoluol, Styrol, alpha-Methylstyrol, beta-Methylstyrol, Inden, Dicyclopentadien und deren alkylierte Derivate. Dabei wird ein Kohlenwasserstoffgemisch enthaltend die Monomerzusammensetzung und mindestens 30 Gew.% eines organischen Lösungsmittels mit einer sauren ionischen Flüssigkeit in Kontakt gebracht, wodurch das Kohlenwasserstoffharz erhalten wird.

EP 1 900 763 A1

## Beschreibung

Die vorliegende Erfindung betrifft ein Verfahren zur Herstellung eines Kohlenwasserstoffharzes durch Polymerisation einer definierten Monomerzusammensetzung gemäss Anspruch 1, ein Kohlenwasserstoffharz erhältlich nach einem solchen Verfahren gemäss Anspruch 12 und die Verwendung einer sauren ionischen Flüssigkeit als Katalysator für die Polymerisation der Monomerzusammensetzung gemäss Anspruch 13.

Kohlenwasserstoffharze sind thermoplastische Polymere mit geringen bis moderat hohen Molekularmassen. Sie werden mittels kationischer Polymerisation ungesättigter Kohlenwasserstoffverbindungen hergestellt. Eine solche Polymerisation wird auch als Verharzung bezeichnet. Die derart hergestellten Kohlenwasserstoffharze umspannen den Bereich von viskosen Flüssigkeiten bis zu hart-spröden Feststoffen.

Die Kohlenwasserstoffharze werden üblicherweise zur Modifizierung anderer Materialien (Matrixmaterialien) und nicht als solche verwendet. Bei den zu modifizierenden Matrixmaterialien handelt es sich in der Regel um Polymere. Unter den Kohlenwasserstoffharzen sind insbesondere solche, die durch Polymerisation der in der sogenannten "C9-Fraktion" enthaltenen Monomere erhalten werden, als Modifikatoren in Klebstoffen, Gummi, Schmelzklebstoffen, Schmelzbeschichtungen, Druckfarben, Bodenbelägen, Farben und weiteren Anwendungen geeignet.

Die C9-Fraktion, wie sie beispielsweise aus Petroleumdestillaten der Naphtha-Cracker oder aus den Leichtölfraktionen der Steinkohlenteerdestillation erhältlich ist, enthält mindestens ein aromatisches Monomer ausgewählt aus der Gruppe bestehend aus Vinyltoluol, Styrol, alpha-Methylstyrol, beta-Methylstyrol, Inden, Dicyclopentadien und deren alkylierte Derivate. Zusätzlich werden diese Monomere von nicht polymerisierbaren Komponenten wie Xylol, Ethylbenzol, Cumol, Ethyltoluol, Indan, Methylindan, Naphthalin und weiteren nicht polymerisierbaren Verbindungen begleitet. Bei der Polymerisation der Monomere der C9-Fraktion fungieren diese nicht polymerisierbaren Komponenten als Lösungsmittel.

Die Polymerisation zur Herstellung eines Kohlenwasserstoffharzes wird konventionell mit Hilfe von Friedel-Crafts-Katalysatoren wie zum Beispiel $BF_3$ durchgeführt. Die dabei verwendeten Friedel-Crafts-Katalysatoren sind homogene Katalysatoren, d.h. sie befinden sich in der gleichen Phase wie die Reaktanden.

Homogen katalysierte Polymerisationen sind bezüglichen katalytischer Wirkung zwar sehr effektiv, weisen aber auch schwerwiegende Nachteile auf.

Einer der Hauptnachteile der homogenen Katalyse liegt darin, dass der verwendete Friedel-Crafts-Katalysator nach erfolgter Verharzung in der Regel durch Basenbehandlung irreversibel inaktiviert werden muss. So wird etwa $BF_3$ in den gängigen Verfahren unter Bildung von nicht-löslicher Borsäure und anorganischen Fluoriden zerstört und daraufhin in einem aufwändigen Filtrationsverfahren vom Produkt-Lösungsmittelgemisch abgetrennt.

Somit ergibt sich mit den konventionellen Verfahren eine Kombination an unerwünschten Prozessen, nämlich die irreversible Inaktivierung und somit die Vernichtung des Katalysators sowie die Entsorgung des inaktivierten Katalysators.

Um die Probleme, die sich mit einem homogenen Katalysator ergeben, zu umgehen, wurde daher vorgeschlagen, statt des homogenen Katalysators ein an einen festen Träger gebundenen sauren Katalysator zu verwenden, der nach erfolgter Polymerisation von der Reaktionsmischung entfernt werden kann. Entsprechende Verfahren sind zum Beispiel in WO 98/30519, US-B-6,444,866 und US-B-6,608,155 beschrieben. Allerdings führen die darin beschriebenen heterogenen Katalysatorsysteme zu relativ schlechten Raum-Zeit-Ausbeuten. Aufgrund der raschen Verharzung und der damit einhergehenden raschen Deaktivierung der reaktiven Zentren des heterogenen Katalysators sind diese zudem für kontinuierliche Verfahren schlecht geeignet. In der Praxis haben sich solche Systeme folglich auch nicht durchgesetzt.

Alternativ zu den an Träger gebundenen sauren Katalysatoren wurde für die Polymerisation von aliphatischen 1-Alkenen, d.h. aliphatischen Monoenen mit der Doppelbindung in Position 1 (auch "1-Olefine" oder "Alphaolefine" genannt), und Monomermischungen enthaltend aliphatische 1-Alkene die Verwendung ionischer Flüssigkeiten, d.h. Salzgemischen mit einem relativ tiefen Schmelzpunkt, vorgeschlagen:

So beschreibt FR-A-2611700 ein Verfahren zur Dimerisierung von Buten mit Hilfe von auf Nickel basierenden organometallischen Katalysatoren, die in ionischen Flüssigkeiten gelöst sind.

US-B-5,304,615 beschreibt ein Verfahren zur Oligomerisierung von Buten mit Hilfe einer ionischen Flüssigkeit in Abwesenheit eines Ni-Katalysators. US-B-5,304,615 stellt zudem fest, dass nicht alle ionischen Flüssigkeiten für die spezifischen Reaktionen, in denen sie angewendet werden können, wünschenswerte Eigenschaften besitzen und dass die Wahl spezieller ionischer Flüssigkeiten für eine vorgegebene Reaktion kaum vorhersagbar ist.

WO 95/21871 beschreibt eine ionische Flüssigkeit enthaltend ein dialkylsubstituiertes Imidazolhalogenid und deren Verwendung für die Polymerisierung von Olefinen mit zwei bis vier Kohlenstoffatomen.

WO 00/32658 bezieht sich auf eine ionische Flüssigkeiten und deren Funktion als Initiator oder Cosolvens bei der

Herstellung von Polyisobutylenen mit hohem Molekulargewicht.

US-B-6,395,948 und die zur selben Patentfamilie gehörende WO 03/070670 offenbaren ein Verfahren zur Herstellung eines hochviskosen Polyalphaolefins unter Verwendung einer ionischen Flüssigkeit als Katalysator. Gemäss dieser Druckschrift ist es wesentlich, dass die Reaktionsmischung kein Lösungsmittel enthält.

WO 03/089390 und die entsprechende US-A-2004/0030075 beschreiben ein Verfahren zur kontinuierlichen Herstellung eines hochviskosen Polyalphaolefinprodukts durch Einleitung eines Monomers und einer ionische Flüssigkeit in eine Reaktionszone und gleichzeitiger Entnahme eines Ausflusses enthaltend das hochviskose Polyalphaolefin. Die eingesetzten Olefine können 4 bis 20 Kohlenstoffatome aufweisen.

US-A-2005/0113621, die auf der US-A-2004/0030075 basiert, offenbart ein Verfahren zur Herstellung sehr hochviskoser Polyalphaolefine mittels einer sauren ionischen Flüssigkeit als Oligomerisierungskatalysator in Abwesenheit eines organischen Verdünnungsmittel.

EP-A-0791643 bezieht sich auf ein Verfahren zur Herstellung von Schmierölen durch Oligomerisierung eines Ausgangsmaterial enthaltend ein oder mehrere C5 - C18 1-Olefine in der Anwesenheit eines Oligomerisierungskatalysators enthaltend eine ionische Flüssigkeit.

Die beschriebenen Verfahren gehen alle von aliphatischen 1-Alkenen aus, also aliphatischen Monoenen mit der Doppelbindung in Position 1, oder Monomermischungen enthaltend aliphatische 1-Alkene. Allerdings ist es bisher noch nicht gelungen, ein Verfahren zur Herstellung von Kohlenwasserstoffharzen zu entwickeln, das von Monomerzusammensetzungen enthaltend aromatische Monomere, wie sie z.B. in der C9-Fraktion vorliegen, ausgeht und die sich mit der oben beschriebenen homogenen Katalyse ergebenden Nachteile nicht aufweist.

Ein solches Verfahren ist aber wünschenswert, zumal die C9-Fraktion eine technisch relevante Monomerzusammensetzung darstellt, die relativ leicht zugänglich ist.

Es ist somit eine Aufgabe der vorliegenden Erfindung, ein Verfahren zur Herstellung eines Kohlenwasserstoffharzes zur Verfügung zu stellen, welches von einer Monomerzusammensetzung enthaltend mindestens ein Monomer ausgewählt aus der Gruppe bestehend aus Vinyltoluol, Styrol, alpha-Methylstyrol, beta-Methylstyrol, Inden, Dicyclopentadien und deren alkylierte Derivate ausgeht und welches die sich mit der oben beschriebenen homogenen Katalyse ergebenden Nachteile umgeht.

Diese Aufgabe wird erfindungsgemäss gelöst durch das Verfahren gemäss Anspruch 1. Bevorzugte Ausführungen des Verfahrens sind in den abhängigen Ansprüchen definiert.

Gemäss Anspruch 1 wird ein Kohlenwasserstoffgemisch enthaltend die Monomerzusammensetzung und mindestens 30 Gew.% eines organischen Lösungsmittels mit einer sauren ionischen Flüssigkeit in Kontakt gebracht, wodurch das Kohlenwasserstoffharz erhalten wird.

Es hat sich überraschenderweise gezeigt, dass das erfindungsgemässe Verfahren zu Produkten führt, die den marktüblichen Anforderungen gerecht werden und hinsichtlich Kettenlänge, Erweichungspunkt und Farbe den jeweiligen Vorgaben entsprechend gezielt hergestellt werden können. Zudem werden mit dem erfindungsgemässen Verfahren gute Raum-Zeit-Ausbeuten erzielt. Dies war unter anderem aufgrund der nicht voraussagbaren, je nach Ausgangsmaterial variierenden Wirkung von ionischen Flüssigkeiten für das beschriebene Kohlenwasserstoffgemisch nicht zu erwarten.

Unter ionischen Flüssigkeiten werden in der Regel organische Salze verstanden, die unterhalb von 180°C flüssig sind. Sie besitzen keinen messbaren Dampfdruck, sind nicht entflammbar und weisen in der Regel eine hohe thermische Stabilität auf. Darüber hinaus sind sie in einem weiten Temperaturbereich flüssig und für die Zweiphasenkatalyse geeignet. Mittels der erfindungsgemäss verwendeten ionischen Flüssigkeiten lassen sich somit die Vorteile homogener Katalysatorsysteme, nämlich die hohe

Aktivität und Selektivität, mit den Vorteilen heterogener Katalysatorsysteme, nämlich die einfache Produktabtrennung, vereinen.

So kann nach erfolgter Polymerisation die saure ionische Flüssigkeit aufgrund der Nichtmischbarkeit mit der organischen Phase durch einfache Zweiphasentrennoperation als separate Phase von dieser abgetrennt und beinahe ohne jeglichen Verlust wiederverwendet werden. Dies ist von besonderer Bedeutung, da ionische Flüssigkeiten in der Regel schwer zugänglich und teuer sind. Zudem wird die weitere Aufarbeitung der das Produkt enthaltenden Lösung drastisch vereinfacht.

Weiterhin verfügen die ionischen Flüssigkeiten über hohe Wärmekapazitäten und können entstehende Reaktionswärme gut abführen. Bei den sauren ionischen Flüssigkeiten ist zudem die Lewis-Acidität in weiten Bereichen durch Modifikation des Moleküls einstellbar. Solche Modifikationen sind für einzelne saure ionischen Flüssigkeiten dem Fachmann bekannt und werden für Chloroaluminate beispielsweise von Carmichael, Adrian J.; Haddleton, David M.S. in "Polymer Synthesis in Ionic Liquids" (aus Wasserscheid, P. und Welton T., "Ionic Liquids in Synthesis", 2003, S. 319 bis 335) beschrieben.

Das erfindungsgemässe Verfahren ist hinsichtlich Änderungen in dem als Ausgangsmaterial verwendeten Kohlenwasserstoffgemisch toleranter als konventionelle Verfahren. Durch Massschneidern der ionischen Flüssigkeit können zudem Änderungen im Kohlenwasserstoffgemisch berücksichtigt werden, ohne dass dies Verluste an der Reaktivität oder der Produktqualität zur Folge hätte.

Bevorzugt enthält die Monomerzusammensetzung mindestens ein Monomer ausgewählt aus der Gruppe bestehend aus Vinyltoluol, alpha-Methylstyrol, beta-Methylstyrol, Inden und deren alkylierte Derivaten, besonders bevorzugt mindestens Inden und/oder ein alkyliertes Derivat davon.

Es ist denkbar, zusätzlich zu den als organisches Lösungsmittel fungierenden, nicht polymerisierbaren Komponenten im Kohlenwasserstoffgemisch weiteres organisches Lösungsmittel hinzuzufügen. So können beispielsweise lineare oder verzweigte Alkane, wie z.B. Pentan, Hexan oder Heptan, und/oder Alicyclen als organisches Lösungsmittel zum Kohlenwasserstoffgemisch hinzugefügt werden.

Im Allgemeinen wird beim Verfahren der vorliegenden Erfindung von der beim Cracken von Erdölfraktionen als Nebenprodukt anfallenden C9-Fraktion mit den oben angegebenen Komponenten ausgegangen. Eine beispielhafte C9-Fraktion weist ca. 2.0 Gew.% Styrol, ca. 4.0 Gew.% alpha-Methylstyrol, ca. 20.0 Gew.% Vinyltoluole, ca. 6.0 Gew.% Dicyclopentadien, ca. 20.0 Gew.% Inden, ca. 5.0 Gew.% Methylinden, ca. 5.0 Gew.% Naphthalin und ca. 38 Gew.% weiterer, nicht-reaktiver Aromaten auf, wobei die Konzentrationen der einzelnen Komponenten je nach Erdölqualität und Crackbedingungen stark variieren kann.

Vorzugsweise weist die C9-Fraktion mindestens 18 Gew.% Vinyltoluol, mindestens 18 Gew.% Inden und mindestens 4 Gew.% Methylinden auf. Sie weist vorzugsweise zudem höchstens 10 Gew.% Naphthalin, höchstens 2 Gew.% Styrol und höchstens 0.5 Gew.% Dicyclopentadien auf.

Gemäss dem vorliegenden Verfahren werden Monomere unterschiedlicher Reaktivität in das Kohlenwasserstoffharz eingebaut; der Monomerumsatz ist daher gross. Die in der organischen Phase nebst dem gewünschten Kohlenwasserstoffharz enthaltenen nicht umgesetzten Monomere können zusammen mit etwaigen Oligomeren und dem organischen Lösungsmittel sehr einfach mittels Vakuumdestillation vom gewünschten Kohlenwasserstoffharz abgetrennt werden.

In einer weiteren bevorzugten Ausführungsform wird zum Kohlenwasserstoffgemisch vor der Polymerisation mindestens ein aliphatisches Alken, wie zum Beispiel ein verzweigtes Alken, und/oder ein Alkadien als zusätzliches Monomer hinzugefügt. In einem derart additivierten Kohlenwasserstoffgemisch beträgt der Anteil dieser zusätzlichen Monomere im Allgemeinen 2 bis 50 Gew.%, bevorzugt 5 bis 40 Gew.%. Damit können zielgerichtet gewünschte Eigenschaften, wie etwa eine bestimmte Molekulargewichtsverteilung oder eine definierte Verträglichkeit mit einem Matrixpolymer, im Endprodukt eingestellt werden.

Um weitere gewünschte Eigenschaften im Endprodukt erzielen zu können, umfasst das Kohlenwasserstoffgemisch in einer bevorzugten Ausführungsform mindestens eine Kohlenwasserstoffverbindung, die eine Hydroxylgruppe aufweist. In einem solchen Kohlenwasserstoffgemisch beträgt der Anteil an der die Hydroxylgruppe aufweisenden Kohlenwasserstoffverbindung im Allgemeinen 2 bis 50 Gew.%, bevorzugt 5 bis 40 Gew.%. So kann beispielsweise Phenol vor der Polymerisation zum Kohlenwasserstoffgemisch hinzugefügt werden, um ein entsprechend additiviertes Kohlenwasserstoffgemisch zu erhalten. Damit kann im gleichen Sinne wie mit den aliphatischen Alkenen und Alkadienen die Verträglichkeit des Kohlenwasserstoffharzes mit den polymeren Matrixsystemen angepasst werden.

Im konkreten Fall erlaubt es Phenol, eine Anpassung an hydrophile Polymere zu erzielen.

Das Kohlenwasserstoffgemisch wird im Allgemeinen bei einer Temperatur zwischen -20°C und 60°C in Kontakt mit der sauren ionischen Flüssigkeit gebracht.

Ionische Flüssigkeiten im Sinne der vorliegenden Erfindung sind vorzugsweise Salze der allgemeinen Formel

$$[A]_n^+ \quad [Y]^{n-}$$

in der n für 1, 2, 3 oder 4 steht, $[A]^+$ für ein quartäres Ammonium-Kation, ein Sulfonium-Kation oder ein Phosphonium-Kation und $[Y]^{n-}$ für ein ein-, zwei-, drei-oder vierwertiges Anion steht; oder Gemische von diesen.

Vorzugsweise besitzen die ionischen Flüssigkeiten einen Schmelzpunkt von weniger als 180°C. Weiterhin bevorzugt liegt der Schmelzpunkt in einem Bereich von -100°C bis 150°C, mehr bevorzugt im Bereich von -50°C bis 120°C und weiterhin mehr bevorzugt unter 100°C.

Bei den erfindungsgemäßen ionischen Flüssigkeiten handelt es sich um organische Verbindungen, d.h. dass mindestens ein Kation oder ein Anion der ionischen Flüssigkeit einen organischen Rest enthält.

Verbindungen, die sich zur Bildung des Kations $[A]^+$ von ionischen Flüssigkeiten eignen, sind z.B. aus DE 102 02 838 A1 bekannt. So können solche Verbindungen Phosphor-, Schwefel- oder insbesondere Stickstoffatome enthalten, beispielsweise mindestens ein Stickstoffatom, bevorzugt 1-10 Stickstoffatome, besonders bevorzugt 1-5, ganz besonders bevorzugt 1-3 und insbesondere 1-2 Stickstoffatome. Gegebenenfalls können auch weitere Heteroatome wie Sauerstoff-, Schwefel- oder Phosphoratome enthalten sein. Das Stickstoffatom ist ein geeigneter Träger der positiven Ladung im Kation der ionischen Flüssigkeit, von dem im Gleichgewicht dann ein Proton bzw. ein Alkylrest auf das Anion übergehen kann, um ein elektrisch neutrales Molekül zu erzeugen.

Für den Fall, dass das Stickstoffatom der Träger der positiven Ladung im Kation der ionischen Flüssigkeit ist, kann bei der Synthese der ionischen Flüssigkeiten zunächst durch Quaternisierung am Stickstoffatom etwa eines Amins oder Stickstoff-Heterocyclus' ein Kation erzeugt werden. Die Quaternisierung kann durch Alkylierung des Stickstoffatoms erfolgen. Je nach verwendetem Alkylierungsreagens werden Salze mit unterschiedlichen Anionen erhalten. In Fällen, in denen es nicht möglich ist, das gewünschte Anion bereits bei der Quaternisierung zu bilden, kann dies in einem weiteren Syntheseschritt erfolgen. Ausgehend beispielsweise von einem Ammoniumhalogenid kann das Halogenid mit einer Lewissäure umgesetzt werden, wobei aus Halogenid und Lewissäure ein komplexes Anion gebildet wird. Alternativ dazu ist der Austausch eines Halogenidions gegen das gewünschte Anion möglich. Dies kann durch Zugabe eines Metallsalzes unter Ausfällung des gebildeten Metallhalogenids, über einen Ionenaustauscher oder durch Verdrängung des Halogenidions durch eine starke Säure (unter Freisetzung der Halogenwasserstoffsäure) geschehen. Geeignete Verfahren sind beispielsweise in Angew. Chem. 2000, 112, S. 3926 - 3945 und der darin zitierten Literatur beschrieben.

Geeignete Alkylreste, mit denen das Stickstoffatom in den Aminen oder Stickstoff-Heterocyclen beispielsweise quaternisiert sein kann, sind $C_1$-$C_{18}$-Alkyl, bevorzugt $C_1$-$C_{10}$-Alkyl, besonders bevorzugt $C_1$-$C_6$-Alkyl und ganz besonders bevorzugt Methyl. Die Alkylgruppe kann unsubstituiert sein oder einen oder mehrere gleiche oder verschiedene Substituenten aufweisen.

Bevorzugt sind solche Verbindungen, die mindestens einen fünf- bis sechsgliedrigen Heterocyclus, insbesondere einen fünfgliedrigen Heterocyclus, enthalten, der mindestens ein Stickstoffatom sowie gegebenenfalls ein Sauerstoff- oder Schwefelatom aufweist, besonders bevorzugt sind solche Verbindungen, die mindestens einen fünf- bis sechsgliedrigen Heterocyclus enthalten, der ein, zwei oder drei Stickstoffatome und ein Schwefel- oder ein Sauerstoffatom aufweist, ganz besonders bevorzugt solche mit zwei Stickstoffatomen. Weiterhin bevorzugt sind aromatische Heterocyclen.

Besonders bevorzugte Verbindungen sind solche, die ein Molgewicht unter 1000 g/mol aufweisen, ganz besonders bevorzugt unter 500 g/mol.

Weiterhin sind solche Kationen bevorzugt, die ausgewählt sind aus den Verbindungen der Formeln (IVa) bis (IVw),

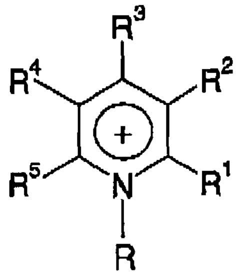

(IVa)

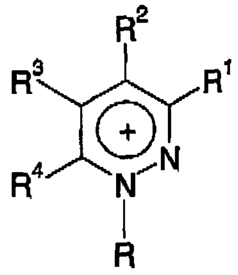

(IVb)

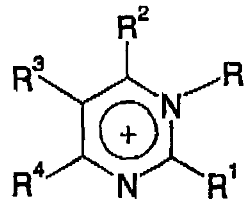

(IVc)

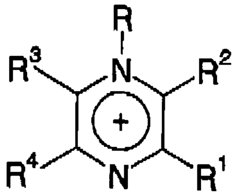

(IVd)

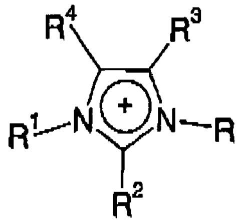

(IVe)

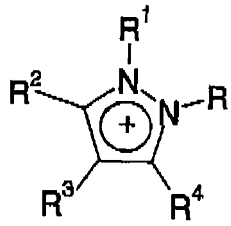

(IVf)

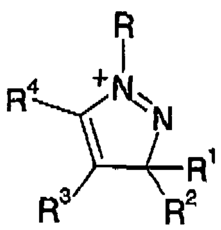

(IVg)

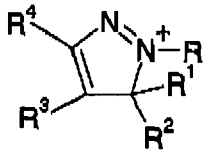

(IVg')

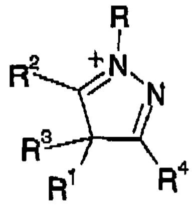

(IVh)

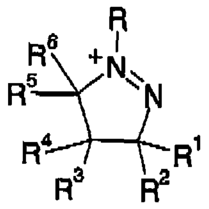

(IVi)

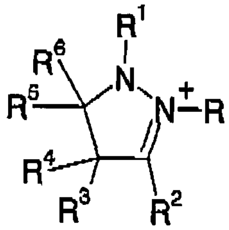

(IVj)

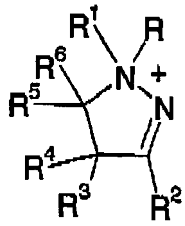

(IVj')

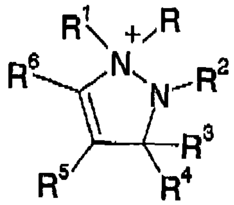

(IVk)

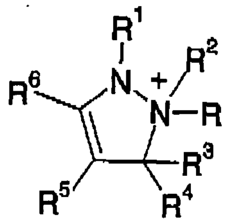

(IVk')

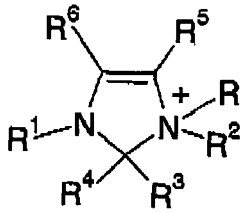

(IVl)

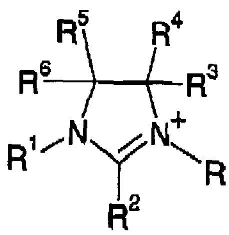

(IVm)

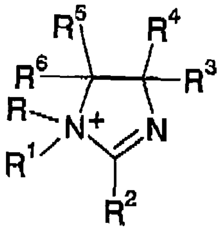

(IVm')

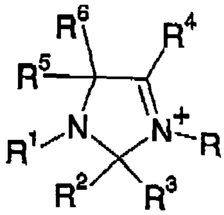

(IVn)

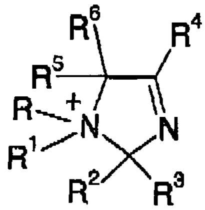

(IVn')

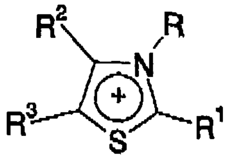

(IVo)

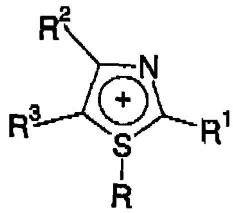

(IVo')

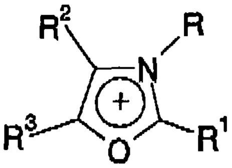

(IVp)

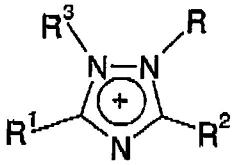

(IVq)

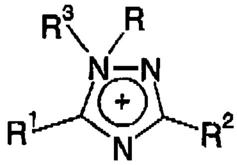

(IVq')

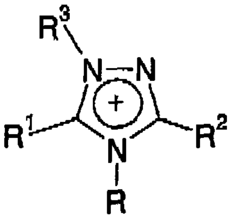

(IVq")

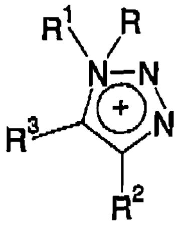

(IVr)

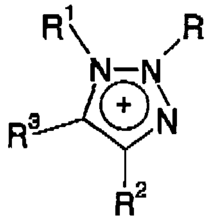

(IVr')

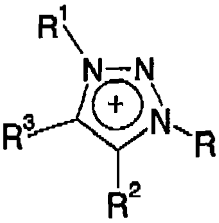

(IVr")

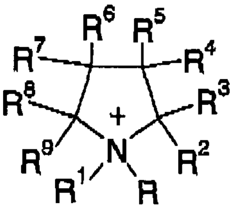

(IVs)

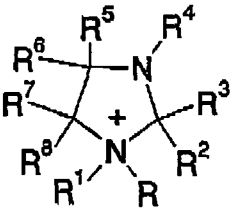

(IVt)

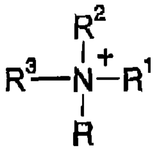

(IVu)

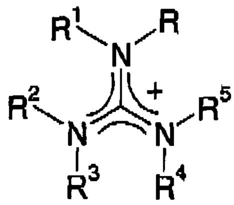

(IVv)

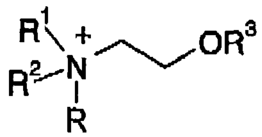

(IVw)

sowie Oligomere, die diese Strukturen enthalten.

Weitere geeignete Kationen sind Verbindungen der allgemeinen Formel (IVx) und (IVy)

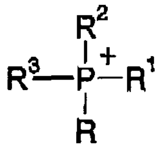

(IVx)

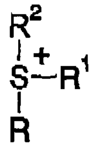

(IVy)

sowie Oligomere, die diese Struktur enthalten.

In den oben genannten Formeln (IVa) bis (IVy) stehen
der Rest R für Wasserstoff, einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder geeignete funktionelle Gruppen unterbrochenen oder substituierten Rest mit 1 bis 20 Kohlenstoffatomen; und
die Reste $R^1$ bis $R^9$ unabhängig voneinander für Wasserstoff, eine Sulfo-Gruppe oder einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder geeignete funktionelle Gruppen unterbrochenen oder substituierten Rest mit 1 bis 20 Kohlenstoffatomen, wobei die Reste $R^1$ bis $R^9$, welche in den oben genannten Formeln (IV) an ein Kohlenstoffatom (und nicht an ein Heteroatom) gebunden sind, zusätzlich auch für Halogen oder eine funktionelle Gruppe stehen können; oder
zwei benachbarte Reste aus der Reihe $R^1$ bis $R^9$ zusammen auch für einen zweibindigen, Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder geeignete funktionelle Gruppen unterbrochenen oder substituierten Rest mit 1 bis 30 Kohlenstoffatomen.

Als Heteroatome kommen bei der Definition der Reste R und $R^1$ bis $R^9$ prinzipiell alle Heteroatome in Frage, welche in der Lage sind, formell eine $-CH_2-$, eine -CH=, eine -C≡ oder eine =C= -Gruppe zu ersetzen. Enthält der Kohlenstoff enthaltende Rest Heteroatome, so sind Sauerstoff, Stickstoff, Schwefel, Phosphor und Silizium bevorzugt, insbesondere Sauerstoff oder Stickstoff.

Als funktionelle Gruppen kommen prinzipiell alle funktionellen Gruppen in Frage, welche an ein Kohlenstoffatom oder ein Heteroatom gebunden sein können, beispielsweise um -CN (Cyano) oder -COO-R' (Ester), wobei es sich bei dem Rest R' um den verbleibenden Teil des Kohlnestoff enthaltenden Restes handelt.

Als Halogene seien Fluor, Chlor, Brom und Iod genannt.

Bevorzugt steht der Rest R sowie die Reste $R^1$ bis $R^9$ unabhängig für
unverzweigtes oder verzweigtes, unsubstituiertes oder ein bis mehrfach mit Halogen, Phenyl, Cyano, oder $C_1$-$C_6$-Alkoxycarbonyl substituiertes $C_1$-$C_{18}$-Alkyl mit insgesamt 1 bis 20 Kohlenstoffatomen, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl, 1-Octadecyl, Benzyl, 3-Phenylpropyl, 2-Cyanoethyl, 2-(Methoxycarbonyl)-ethyl, 2-(Ethoxycarbonyl)-ethyl, 2-(n-Butoxy-carbonyl)-ethyl, Trifluormethyl, Difluormethyl, Fluormethyl, Pentafluorethyl, Heptafluorpropyl, Heptafluorisopropyl, Nonafluorbutyl, Nonafluorisobutyl, Undecylfluorpentyl und Undecylfluorisopentyl;
sowie in den Formeln IVa bis IVd, IVg bis IVi, IVo bis IVp für die Reste $R^1$ bis $R^9$ zusätzlich für Wasserstoff;
sowie in den Formeln IVe bis IVf, IVj, IVj', IVm bis IVn' und IVr bis IVs für die Reste $R^2$ bis $R^9$ zusätzlich für Wasserstoff;
sowie in den Formeln IVk bis IVl für die Reste $R^3$ bis $R^9$ zusätzlich Wasserstoff;
sowie in den Formeln IVq bis Ivq" für die Reste $R^2$, $R^3$ und $R^5$ bis $R^8$ zusätzlich für Wasserstoff; und
sowie in der Formel IVt" für die Reste $R^1$ und $R^2$ zusätzlich für Wasserstoff;

Als Anionen sind prinzipiell alle Anionen einsetzbar.

Das Anion $[Y]^{n-}$ der ionischen Flüssigkeit ist beispielsweise ausgewählt aus

- der Gruppe der Halogenide und halogenhaltigen Verbindungen der Formel:

$F^-$, $Cl^-$, $Br^-$, $I^-$, $BF_4^-$, $PF_6^-$, $AlCl_4^-$, $Al_2Cl_7^-$, $Al_3Cl_{10}^-$, $AlBr_4^-$, $FeCl_4^-$, $BCl_4^-$, $SbF_6^-$, $AsF_6$, $^-ZnCl_3^-$, $SnCl_3^-$, $CuCl_2^-$, $CF_3SO_3^-$, $CF_3CO_2^-$, $CCl_3CO_2^-$, $CN^-$, $SCN^-$, $OCN^-$

- der Gruppe der Sulfate, Sulfite und Sulfonate der allgemeinen Formel:

$SO_4^{2-}$, $HSO_4^-$, $SO_3^{2-}$, $HSO_3^-$, $R^aOSO_3^-$, $R^aSO_3^-$

- der Gruppe der Phosphate der allgemeinen Formel

$PO_4^{3-}$, $HPO_4^{2-}$, $H_2PO_4^-$, $R^aPO_4^{2-}$, $HR^aPO_4^-$, $R^aR^bPO_4^-$

- der Gruppe der Phosphonate und Phosphinate der allgemeinen Formel:

$R^aHPO_3^-$,$R^aR^bPO_2^-$, $R^aR^bPO_3^-$

- der Gruppe der Phosphite der allgemeinen Formel:

$PO_3^{3-}$, $HPO_3^{2-}$, $H_2PO_3^-$, $R^aPO_3^{2-}$, $R^aHPO_3^-$, $R^aR^bPO_3^-$

- Gruppe der Phosphonite und Phosphinite der allgemeinen Formel;

$R^aR^bPO_2^-$, $R^aHPO_2^-$, $R^aR^bPO^-$, $R^aHPO^-$

- der Gruppe der Carbonsäuren der allgemeinen Formel:

$R^aCOO^-$

- der Gruppe der Borate der allgemeinen Formel:

$BO_3^{3-}$, $HBO_3^{2-}$, $H_2BO_3^-$, $R^aR^bBO_3^-$, $R^aHBO_3^-$, $R^aBO_3^{2-}$, $B(OR^a)(OR^b)(OR^c)(OR^d)^-$, $B(HSO_4)^-$, $B(R^aSO_4)^-$

- der Gruppe der Boronate der allgemeinen Formel:

$R^aBO_2^{2-}$, $R^aR^bBO^-$

- der Gruppe der Carbonate und Kohlensäureester der allgemeinen Formel:

$HCO_3^-$, $CO_3^{2-}$, $R^aCO_3^-$

- der Gruppe der Silikate und Kieselsäuresäureester der allgemeinen Formel:

$SiO_4^{4-}$, $HSiO_4^{3-}$, $H_2SiO_4^{2-}$, $H_3SiO_4^-$, $R^aSiO_4^{3-}$, $R^aR^bSiO_4^{2-}$, $R^aR^bR^cSiO_4^-$, $HR^aSiO_4^{2-}$, $H_2R^aSiO_4^-$, $HR^aR^bSiO_4^-$

- der Gruppe der Halometallate der allgemeinen Formel

$$[M_qHal_r]^{3-},$$

wobei M für ein Metall und Hal für Fluor, Chlor, Brom oder Iod steht, q und r ganze positive Zahlen sind und die Stöchiometrie des Komplexes angeben und s eine ganze positive Zahl ist und die Ladung des Komplexes angibt.

Darin bedeuten $R^a$, $R^b$ $R^c$ und $R^d$ unabhängig voneinander jeweils Wasserstoff, $C_1$-$C_{30}$-Alkyl, gegebenenfalls durch ein oder mehrere nicht-benachbarte Sauerstoff- und/oder Schwefelatome und/oder ein oder mehrere substituierte Iminogruppen unterbrochenes $C_2$-$C_{18}$-Alkyl, $C_6$-$C_{14}$-Aryl, $C_5$-$C_{12}$-Cycloalkyl oder einen fünf- bis sechsgliedrigen, Sauerstoff-, Stickstoff- und/oder Schwefelatome aufweisenden Heterocyclus, wobei zwei von ihnen gemeinsam einen ungesättigten, gesättigten oder aromatischen, gegebenenfalls durch ein oder mehrere Sauerstoff- und/oder Schwefelatome und/oder ein oder mehrere unsubstituierte oder substituierte Iminogruppen unterbrochenen Ring bilden können, wobei die genannten Reste jeweils zusätzlich durch geeignete funktionelle Gruppen, Aryl, Alkyl, Aryloxy, Alkyloxy, Halogen, Heteroatome und/oder Heterocyclen substituiert sein können. Vorzugsweise stehen $R^a$, $R^b$, $R^c$ und $R^d$ unabhängig voneinander jeweils Wasserstoff oder $C_1$-$C_{30}$-Alkyl, insbesondere $C_1$-$C_6$-Alkyl.

Bevorzugte Anionen sind Chlormetallate, insbesondere von Aluminium, Titan, Gallium, Indium, Eisen, Cobalt, Nickel, Hafnium, Zirkonium, Kupfer, Zink, Vanadium, Chrom und Mangan.

In einer bevorzugten Ausführungsform der Erfindung wird eine saure ionische Flüssigkeit der allgemeinen Formel

$$[A]^+_n\ [Y]^{n-}$$

eingesetzt, in der $[A]_n^+$ ein Pyridinium der Formel IVa, ein Imidazolium der Formel IVe, ein Pyrazolium der Formel IVf oder IVg oder IVg', ein Ammonium der Formel IVu, ein Cholinium der Formel Ivw oder ein Phosphonium der Formel IVy; und
$[Y]^{n-}$ ein Chloroaluminat
ist.

Vorzugsweise werden hierbei saure ionische Flüssigkeiten der allgemeinen Formel I mit $[A]_n^+[Y]^{n-}$ eingesetzt, in der
$[A]_n^+$ für ein Pyridinium der Formel IVa steht.

Ganz besonders bevorzugt setzt man hierbei als Pyridiniumionen (IVa) solche ein, bei denen

- einer der Reste $R^1$ bis $R^5$ Methyl oder Ethyl ist und die verbleibenden Reste $R^1$ bis $R^5$ Wasserstoff sind;
- alle Reste $R^1$ bis $R^5$ Wasserstoff sind.

Ebenso vorzugsweise werden hierbei saure ionische Flüssigkeiten der allgemeinen Formel I mit $[A]_n^+[Y]^{n-}$eingesetzt, in der
$[A]_n^+$ für ein Imidazolium der Formel IVe steht.

Ganz besonders bevorzugt setzt man als Imidazoliumionen (IVe) solche ein, bei denen

- $R^1$ Methyl, Ethyl, 1-Propyl, 1-Butyl, 1-Pentyl, 1-Hexyl oder 1-Octyl, und $R^2$ bis $R^4$ unabhängig voneinander Wasserstoff, Methyl oder Ethyl sind.

Als ganz besonders bevorzugte Imidazoliumionen (IVe) seien genannt 1,3-Dimethylimidazolium, 1-Ethyl-3-methylimidazolium, 1-(1-Butyl)-3-methylimidazolium, 1-(1-Butyl)-3-ethylimidazolium, 1-(1-Hexyl)-3-methyl-imidazolium, 1-(1-Hexyl)-3-ethyl-imidazolium, 1-(1-Hexyl)-3-butyl-imidazolium, 1-(1-Octyl)-3-methylimidazolium, 1-(1-Octyl)-3-ethylimidazolium, 1-(1-Octyl)-3-butylimidazolium, 1-(1-Dodecyl)-3-methylimidazolium, 1-(1-Dodecyl)-3-ethylimidazolium, 1-(1-Dodecyl)-3-butylimidazolium, 1-(1-Dodecyl)-3-octylimidazolium, 1-(1-Tetradecyl)-3-methylimidazolium, 1-(1-Tetradecyl)-3-ethylimidazolium, 1-(1-Tetradecyl)-3-butylimidazolium, 1-(1-Tetrad,ecyl)-3-octylimidazolium, 1-(1-Hexadecyl)-3-methylimidazolium, 1-(1-Hexadecyl)-3-ethylimidazolium, 1-(1-Hexadecyl)-3-butylimidazolium, 1-(1-Hexadecyl)-3-octylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethyl-imidazolium, 1-(1-Octyl)-2,3-dimethylimidazolium, 1,3,4-Trimethylimidazolium, 1,4-Dimethyl-3-ethylimidazolium, 1,4-Dimethyl-3-octylimidazolium, 1,3,4,5-Tetramethylimidazolium, 1,4,5-Trimethyl-3-ethylimidazolium, 1,4,5-Trimethyl-3-butylimidazolium und 1,4,5-Trimethyl-3-octylimidazolium.

Ebenso vorzugsweise werden hierbei saure ionische Flüssigkeiten der allgemeinen Formel I mit $[A]_n^+[Y]^{n-}$ein-

gesetzt, in der
$[A]_n^+$ für ein Pyrazolium der Formel IVf steht.

Ganz besonders bevorzugt setzt man als Pyrazoliumionen (IVf) solche ein, bei denen

- $R^1$ Methyl oder Ethyl ist und $R^2$ bis $R^4$ unabhängig voneinander Wasserstoff oder Methyl sind.

Ebenso vorzugsweise werden hierbei saure ionische Flüssigkeiten der allgemeinen Formel I mit $[A]_n^+[y]^{n-}$eingesetzt, in der
$[A]_n^+$für ein Ammonium der Formel IVu steht.

Ganz besonders bevorzugt setzt man als Ammoniumionen (IVu) solche ein, bei denen

- $R^1$ bis $R^3$ unabhängig voneinander $C_1$- bis $C_{18}$-Alkyl sind; oder

- $R^1$ und $R^2$ zusammen 1,5-pentylen oder 3-Oxa-1,5-pentylen sind und $R^3$ $C_1$-$C_{18}$-Alkyl oder 2-Cyanoethyl ist.

Als ganz besonders bevorzugte Ammoniumionen (IVu) seien genannt Methyl-tri-(1-butyl)-ammonium, N,N-Dimethylpiperidinium und N,N-Dimethylmorpholinium.

Beispiele für die tertiären Amine, von denen sich die quartären Ammoniumionen der allgemeinen Formel (IVu) durch Quaternisierung mit den genannten Resten R ableiten, sind Diethyl-n-butylamin, Diethyl-tert-butylamin, Diethyl-n-pentylamin, Diethyl-hexylamin, Diethyloctylamin, Diethyl-(2-ethylhexyl)-amin, Di-n-propylbutylamin, Di-n-propyl-n-pentylamin, Di-n-propylhexylamin, Di-n-propyloctylamin, Di-n-propyl-(2-ethylhexyl)-amin, Di-isopropylethylamin, Di-iso-propyl-n-propylamin, Di-isopropyl-butylamin, Diisopropylpentylamin, Di-iso-propylhexylamin, Diisopropyloctylamin, Di-iso-propyl-(2-ethylhexyl)-amin, Din-butylethylamin, Di-n-butyl-n-propylamin, Di-n-butyl-n-pentylamin, Di-n-butylhexylamin, Di-n-butyloctylamin, Di-n-butyl-(2-ethylhexyl)-amin, N-n-Butyl-pyrrolidin, N-sek-Butylpyrrodidin, N-tert-Butylpyrrolidin, N-n-Pentylpyrrolidin, N,N-Dimethylcyclohexylamin, N,N-Diethylcyclohexylamin, N,N-Di-n-butylcyclohexylamin, N-n-Propylpiperidin, N-iso-Propylpiperidin, N-n-Butylpiperidin, N-sek-Butylpiperidin, N-tert-Butylpiperidin, N-n-Pentylpiperidin, N-n-Butylmorpholin, N-sek-Butylmorpholin, N-tert-Butylmorpholin, N-n-Pentylmorpholin, N-Benzyl-N-ethylanilin, N-Benzyl-N-n-propylanilin, N-Benzyl-N-iso-propylanilin, N-Benzyl-N-n-butylanilin, N,N-Dimethyl-p-toluidin, N,N-Diethyl-p-toluidin, N,N-Di-n-butyl-p-toluidin, Diethylbenzylamin, Di-n-propylbenzylamin, Di-n-butylbenzylamin, Diethylphenylamin, Di-n-Propylphenylamin und Di-n-Butylphenylamin.

Bevorzugte quartäre Ammoniumsalze der allgemeinen Formel (IVu) sind solche, die sich von folgenden tertiären Aminen durch Quärternisierung mit den genannten Resten R ableiten lassen, wie Di-iso-propylethylamin, Diethyl-tert-butylamin, Di-iso-propylbutylamin, Di-n-butyl-n-pentylamin, N,N-Di-n-butylcyclohexylamin sowie tertiäre Amine aus Pentylisomeren.

Besonders bevorzugte tertiäre Amine sind Di-n-butyl-n-pentylamin und tertiäre Amine aus Pentylisomeren.

Ebenso vorzugsweise werden hierbei saure ionische Flüssigkeiten der allgemeinen Formel I mit $[A]_n^+[Y]^{n-}$eingesetzt, in der
$[A]_n^+$ für ein Cholinium der Formel IVw steht.

Ganz besonders bevorzugt setzt man als Choliniumionen (IVw) solche ein, bei denen

- $R^1$ und $R^2$ unabhängig voneinander Methyl, Ethyl, 1-Butyl oder 1-Octyl sind und $R^3$ Methyl, Ethyl oder Acetyl ist;

- $R^1$ Methyl, Ethyl, 1-Butyl oder 1-Octyl ist, $R^2$ eine - $CH_2$-$CH_2$-$OR^4$-Gruppe ist und $R^3$ und $R^4$ unabhängig voneinander Wasserstoff, Methyl, Ethyl oder Acetyl, sind; oder

- $R^1$ eine -$CH_2$-$CH_2$-$OR^4$-Gruppe ist, $R^2$ eine -$CH_2$-$CH_2$-$OR^5$-Gruppe ist und $R^3$ bis $R^5$ unabhängig voneinander Methyl, Ethyl oder Acetyl sind.

Besonders bevorzugte Choliniumionen (IVw) sind solche, bei denen $R^3$ ausgewählt ist aus Methyl, Ethyl oder Acetyl, insbesondere Methyl oder Ethyl.

Ebenso vorzugsweise werden hierbei saure ionische Flüssigkeiten der allgemeinen Formel I mit $[A]_n^+[Y]^{n-}$eingesetzt, in der
$[A]_n^+$für ein Phosphonium der Formel IVy steht.

Ganz besonders bevorzugt setzt man als Phosphoniumionen (Ivy) solche ein, bei denen

- $R^1$ bis $R^3$ unabhängig voneinander $C_1$-$C_{18}$-Alkyl, insbesondere Butyl, Isobutyl, 1-Hexyl oder 1-Octyl sind.

Vorzugsweise werden hierbei saure ionische Flüssigkeiten der allgemeinen Formel I mit $[A]_n$+$[Y]^{n-}$ eingesetzt,

in der
$[Y]^{n-}$ für $AlCl_4^-$, $Al_2Cl_7^-$, $Al_3Cl_{10}^-$steht.

Für die vorliegende Erfindung eignet sich als saure ionische Flüssigkeit insbesondere 1-Ethyl,-3-methylimidazoliumchloroaluminat und/oder 1-Ethyl-3-butylimidazoliumchloroaluminat.

Durch intensive Vermischung des Kohlenwasserstoffgemischs und der sauren ionischen Flüssigkeit wird .die Polymerisation gestartet. Im Allgemeinen beträgt der Anteil der sauren ionischen Flüssigkeit in der erhaltenen Reaktionsmischung 0,05 bis 15 Gew.%, bevorzugt 0,1 bis 10 Gew.% und besonders bevorzugt 0,2 bis 8 Gew.%.

Die Polymerisation wird beendet, wenn das Kohlenwasserstoffharz das gewünschte Molekulargewicht erreicht hat. Üblicherweise wird mit dem Verfahren der vorliegenden Erfindung das Molekulargewicht so eingestellt, dass der Erweichungspunkt im Bereich von 0°C bis 180°C, vorzugsweise 10°C bis 170°C liegt.

Zur Beendigung der Polymerisation wird die Vermischung des Kohlenwasserstoffgemischs und der sauren ionischen Flüssigkeit unterbrochen, worauf die saure ionische Flüssigkeit aufgrund ihrer Nichtmischbarkeit mit dem Kohlenwasserstoffgemisch und der grösseren Dichte nach unten sinkt und eine separate Phase bildet. Diese kann sehr einfach abgetrennt werden.

Die abgetrennte ionische Flüssigkeit kann weiterverwendet werden. Verluste an saurer ionischer Flüssigkeit mit $[Y]^{n-}$-Anionen vom Halometallat-Typ, welche durch Abspaltung eines entsprechenden neutralen Halometallsalzes verursacht werden, können durch Zugabe des entsprechenden Halometallsalzes kompensiert werden. So können beispielsweise Verluste an ionischer Flüssigkeit vom Chloroaluminat-Typ kompensiert werden, indem entsprechende Mengen an Aluminiumtrichlorid zudosiert werden. Diese so erhaltene ionische Flüssigkeit kann weiter eingesetzt werden.

Das als Monomer-Polymer-Lösungsmittelmischung vorliegende Kohlenwasserstoffgemisch kann mittels Zugabe einer Base einem "Quenching" unterzogen werden, um im Harz gebundene Reste an $AlCl_3$ zu entfernen. Weiter kann gelöstes $AlCL_3$ entfernt werden, indem die organische Phase mit Wasser gewaschen wird.

Die gereinigte Monomer-Polymer-Lösungsmittelmischung wird daraufhin üblicherweise einer Vakuumdestillation unterworfen, um nicht reagierte Monomere, etwaige Oligomere und das Lösungsmittel zu entfernen.

Im Allgemeinen entstehen beim Verfahren der vorliegenden Erfindung Kohlenwasserstoffharze, die Restdoppelbindungen enthalten. Je nach Anwendungsbereich ist es erwünscht, diese zu hydrieren oder im Kohlenwasserstoffharz zu belassen. So kann das Kohlenwasserstoffharz mittels Hydrierung entfärbt werden. Demgegenüber ermöglichen Kohlenwasserstoffharze, in denen die Restdoppelbindungen belassen werden, eine reaktive Einbindung in eine Polymermatrix über kovalente Bindungen. Damit geht einerseits eine erhöhte Kompatibilität zwischen der Polymermatrix und dem Kohlenwasserstoffharz einher, andrerseits wird eine spätere Migration des Kohlenwasserstoffharzes innerhalb der hochmolekularen Polymermatrix unterbunden.

Die Erfindung wird anhand der folgenden Beispiele veranschaulicht.

## Beispiele

### Beispiel 1: Batch-Verharzung der C9-Fraktion

In einem 500 ml Vierhalskolben wird als ionische Flüssigkeit (Initiator) ein Gemisch aus 8 g 1-Ethyl-3-Methylimidazoliumtetrachloroaluminat und 2 g 1-Ethyl-3-Methylimidazoliumheptachlorodialuminat vorgelegt. 100 g einer C9-Fraktion (Zusammensetzung gemäss Tabelle 1) werden in 100 g n-Heptan aufgelöst und unter Rühren zu der ionischen Flüssigkeit getropft.

Tabelle 1: Zusammensetzung der C9-Fraktion

| Substanz | Gewichtsanteil (Gew.%) |
|---|---|
| Styrol | 2 |
| Methylstyrole | 11 |
| Vinyltoluole | 24 |
| Inden | 28 |
| Methylinden | 6 |
| nicht polymerisierbare Aromaten mit acht bis zehn Kohlenstoffatomen (Lösungsmittel) | 29 |

Die Reaktion verläuft exotherm, die Temperatur wird durch Eiskühlung im Bereich von 15 bis 20°C gehalten. Der Ansatz wird trüb und verfärbt sich dunkelrot (die Phase der ionischen Flüssigkeit wird schwarz und die organische Phase rotbraun). Nach dem Ende der Zudosierung lässt man unter Rühren noch 60 Minuten nachreagieren und trennt

am Ende nach dem Abstellen des Rührers die ionische Flüssigkeit von der Heptan-Produktphase ab. Die Heptan-Produktphase wird durch Destillation vom Lösungsmittel befreit. Es wird ein braunes Harz mit einer isolierten Ausbeute von 72% gewonnen. Der Erweichungspunkt des Harzes beträgt 121°C.

**Beispiel 2: Batch-Verharzung einer C9-Fraktion**

In einen 500 ml Vierhalskolben wird als ionische Flüssigkeit (Initiator) ein Gemisch aus 9 g 1-Ethyl-3-Methylimidazoliumtetrachloroaluminat und 1 g 1-Ethyl-3-Methylimidazoliumheptachlorodialuminat vorgelegt. 100 g C9-Fraktion (Zusammensetzung gemäss Tabelle 1) werden in 100 g n-Heptan aufgelöst. Die ionische Flüssigkeit und die gelöste C9-Fraktion werden auf 0°C abgekühlt. Dann wird die gelöste C9-Fraktion unter Rühren zur ionischen Flüssigkeit getropft. Die Reaktion verläuft exotherm, die Temperatur wird durch Eiskühlung im Bereich von 0-5°C gehalten. Die Katalysatorphase wird erst sehr zähflüssig, danach mit wenig Zulauf wieder gut rührbar. Der Ansatz wird trüb und verfärbt sich dunkelrot (die Phase der ionischen Flüssigkeit wird schwarz und die organische Phase rotbraun). Nach dem Ende der Zudosierung lässt man unter Rühren noch 60 Minuten nachreagieren und trennt am Ende nach dem Abstellen des Rührers die ionische Flüssigkeit von der Heptan-Produktphase ab. Die Heptan-Produktphase wird durch Destillation vom Lösungsmittel betreit. Es wird ein braunes Harz mit einer isolierten Ausbeute von 52% gewonnen. Der Erweichungspunkt des Harzes beträgt 162°C.

**Beispiel 3: Batch-Verharzung einer C9-Fraktion**

Tabelle 2: Zusammensetzung einer C9-Fraktion

| Substanz | Gewichtsanteil (Gew.%) |
|---|---|
| Styrol | 1 |
| Methylstyrole | 10 |
| Vinyltoluole | 24 |
| Inden | 30 |
| Methylinden | 5 |
| nicht polymerisierbare Aromaten mit acht bis zehn Kohlenstoffatomen (Lösungsmittel) | 30 |

In einem 1000 ml Kolben werden 138.5 g Cyclohexan vorgelegt und als ionische Flüssigkeit (Initiator) 6 g 1-Ethyl-3-Methylimidazoliumheptachlorodialuminat zugegeben. 461.5 g C9-Fraktion (Zusammensetzung gemäss Tabelle 2) werden bei 27°C innerhalb von 30 Minuten unter Rühren zu der Lösung enthaltend die ionische Flüssigkeit zugegeben. Die Reaktion verläuft exotherm und die Temperatur steigt unter Gegenkühlung bis auf 40°C an. Der Ansatz verfärbt sich dunkelrot. Nach dem Ende der Zudosierung lässt man unter Rühren noch 15 Minuten unter Gegenkühlung und 30 Minuten ohne Kühlung nachreagieren und trennt mit Hilfe eines Scheidetrichters die ionische Flüssigkeit von der Cyclohexan-Produktphase ab. Die Cyclohexan-Produktphase wird nacheinander durch Waschen mit Natronlauge, Salzsäure und Wasser und jeweiligem Abtrennen der organischen Phase aufgearbeitet und anschliessend durch Destillation vom Lösungsmittel befreit. Es wird ein klares, dunkelgelbes Harz mit einer isolierten Ausbeute von 79% gewonnen. Der Erweichungspunkt des Harzes beträgt 126°C.

**Patentansprüche**

1. Verfahren zur Herstellung eines Kohlenwasserstoffharzes durch Polymerisation einer Monomerzusammensetzung enthaltend mindestens ein Monomer ausgewählt aus der Gruppe bestehend aus Vinyltoluol, Styrol, alpha-Methylstyrol, beta-Methylstyrol, Inden, Dicyclopentadien und deren alkylierte Derivate, wobei ein Kohlenwasserstoffgemisch enthaltend die Monomerzusammensetzung und mindestens 30 Gew.% eines organischen Lösungsmittels mit einer sauren ionischen Flüssigkeit in Kontakt gebracht wird, wodurch das Kohlenwasserstoffharz erhalten wird.

2. Verfahren nach Anspruch 1, wobei die Monomerzusammensetzung mindestens ein Monomer ausgewählt aus der Gruppe bestehend aus Vinyltoluol, alpha-Methylstyrol, beta-Methylstyrol, Inden und deren alkylierte Derivate enthält.

3. Verfahren nach Anspruch 1 oder 2, wobei die Monomerzusammensetzung mindestens Inden und/oder ein alkyliertes Derivat davon umfasst.

4. Verfahren nach einem der vorhergehenden Ansprüche, **dadurch gekennzeichnet, dass** zum Kohlenwasserstoffgemisch vor der Polymerisation mindestens ein aliphatisches Alken und/oder Alkadien als zusätzliches Monomer hinzugefügt wird, so dass im derart additivierten Kohlenwasserstoffgemisch der Anteil an zusätzlichem Monomer 2 bis 50 Gew.%, bevorzugt 5 bis 40 Gew.% beträgt.

5. Verfahren nach Anspruch 4, **dadurch gekennzeichnet, dass** als weiteres Monomer ein verzweigtes Alken hinzugefügt wird.

6. Verfahren nach einem der vorhergehenden Ansprüche, **dadurch gekennzeichnet, dass** das Kohlenwasserstoffgemisch 2 bis 50 Gew.%, bevorzugt 5 bis 40 Gew.% einer Kohlenwasserstoffverbindung enthält, die eine Hydroxylgruppe aufweist.

7. Verfahren nach einem der vorhergehenden Ansprüche, **dadurch gekennzeichnet, dass** zum Kohlenwasserstoffgemisch vor der Polymerisation Phenol hinzugefügt wird, so dass im derart additivierten Kohlenwasserstoffgemisch der Anteil an Phenol 2 bis 50 Gew.%, bevorzugt 5 bis 40 Gew.% beträgt.

8. Verfahren nach einem der vorhergenden Ansprüche, **dadurch gekennzeichnet, dass** der Anteil an der sauren ionischen Flüssigkeit in der Reaktionsmischung 0,05 Gew.%, bevorzugt 0,1 bis 10 Gew.%, besonders bevorzugt 0,2 bis 8 Gew.% beträgt.

9. Verfahren nach einem der vorhergehenden Ansprüche, **dadurch gekennzeichnet, dass** die saure ionische Flüssigkeit ein Salz der allgemeinen Formel

$$[A]^+_n \, [Y]^{n-}$$

ist, in der
$[A]^+_n$ Imidazolium, Ammonium, Cholinium, Pyridinium, Pyrazolium oder Phosphonium ist und
$[Y]^{n-}$ ein Chlorometallat von Aluminium, Titan, Gallium, Indium, Eisen, Cobalt, Nickel, Hafnium, Zirkonium, Kupfer, Zink, Vanadium, Chrom oder Mangan ist.

10. Verfahren nach Anspruch 9, **dadurch gekennzeichnet, dass** $[Y]^{n-}$ Chloroaluminat ist.

11. Verfahren nach Anspruch 9 oder 10, **dadurch gekennzeichnet, dass** die saure ionische Flüssigkeit 1-Ethyl-3-methylimidazoliumchloroaluminat und/oder 1-Ethyl-3-butylimidazoliumchloroaluminat ist.

12. Kohlenwasserstoffharz erhältlich nach einem der Verfahren der Ansprüche 1 bis 11.

13. Verwendung einer sauren ionischen Flüssigkeit als Katalysator für die Polymerisation einer Monomerzusammensetzung enthaltend mindestens ein Monomer ausgewählt aus der Gruppe bestehend aus Vinyltoluol, Styrol, alpha-Methylstyrol, beta-Methylstyrol, Inden, Dicyclopentadien und deren alkylierte Derivate.

Europäisches Patentamt

# EUROPÄISCHER RECHERCHENBERICHT

Nummer der Anmeldung
EP 06 01 9322

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| D,Y | WO 95/21871 A (BP CHEM INT LTD [GB]; ABDUL SADA ALA A K [GB]; AMBLER PHILIP WILLIAM [) 17. August 1995 (1995-08-17)<br>* das ganze Dokument *<br>----- | 1-13 | INV.<br>C08F240/00<br>C10G50/00<br>C08F212/00 |
| Y | US 5 731 101 A (SHERIF FAWZY G [US] ET AL) 24. März 1998 (1998-03-24)<br>* das ganze Dokument *<br>----- | 1-13 | |
| D,Y | US 6 608 155 B2 (BABCOCK LAURA M [US] ET AL) 19. August 2003 (2003-08-19)<br>* das ganze Dokument * | 1-13 | |
| X | * Beispiele 54-76 *<br>----- | 12,13 | |
| | | | RECHERCHIERTE SACHGEBIETE (IPC) |
| | | | C07C<br>C08F<br>C10G |

Der vorliegende Recherchenbericht wurde für alle Patentansprüche erstellt

2

| Recherchenort | Abschlußdatum der Recherche | Prüfer |
|---|---|---|
| München | 16. Februar 2007 | BALMER, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 06 01 9322

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-02-2007

| Im Recherchenbericht angeführtes Patentdokument | Datum der Veröffentlichung | Mitglied(er) der Patentfamilie | Datum der Veröffentlichung |
|---|---|---|---|
| WO 9521871 A | 17-08-1995 | AU 1584895 A | 29-08-1995 |
| | | BR 9505775 A | 27-02-1996 |
| | | CA 2159479 A1 | 17-08-1995 |
| | | CN 1123031 A | 22-05-1996 |
| | | CZ 9502576 A3 | 17-01-1996 |
| | | EP 0693088 A1 | 24-01-1996 |
| | | FI 954807 A | 09-10-1995 |
| | | JP 8509242 T | 01-10-1996 |
| | | NO 954015 A | 09-10-1995 |
| US 5731101 A | 24-03-1998 | US 5824832 A | 20-10-1998 |
| US 6608155 B2 | 19-08-2003 | US 2002183465 A1 | 05-12-2002 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9830519 A
- US 6444866 B
- US 6608155 B
- FR 2611700 A
- US 5304615 B
- WO 9521871 A
- WO 0032658 A
- US 6395948 B
- WO 03070670 A
- WO 03089390 A
- US 20040030075 A
- US 20050113621 A
- EP 0791643 A
- DE 10202838 A1


### In der Beschreibung aufgeführte Nicht-Patentliteratur


- **CARMICHAEL, ADRIAN J ; HADDLETON, DAVID M.S.** *Polymer Synthesis in Ionic Liquids*
- **WASSERSCHEID, P. ; WELTON T.** *Ionic Liquids in Synthesis,* 2003, 319-335
- *Angew. Chem.,* 2000, vol. 112, 3926-3945